# EUROPEAN PATENT SPECIFICATION

(11) **EP 2 806 480 B1**
(45) Date of publication and mention of the grant of the patent: **09.08.2017**
(21) Application number: 14164450.0
(22) Date of filing: 11.04.2014
(51) Int. Cl.: H01M 2/10

(54) **Battery accomodation structure and battery accomodation method**
Batterieaufnahmestruktur und Batterieaufnahmeverfahren
Structure de logement de batterie et procédé de réception de batterie

(30) Priority: 20.05.2013 JP 2013106198; 20.05.2013 JP 2013106199
(43) Date of publication of application: 26.11.2014
(73) Proprietor: Nintendo Co., Ltd., Kyoto, 601-8501 (JP)
(72) Inventor: Iwao, Toshiaki, Kyoto 601-8501 (JP); Takamoto, Junji, Kyoto 601-8501 (JP); Wakitani, Noboru, Kyoto-shi, Kyoto 601-8501 (JP); Ibuki, Masato, Kyoto-shi, Kyoto 601-8501 (JP); Tamura, Yoshitaka, Kyoto 601-8501 (JP)
(74) Representative: Lang, Johannes

(56) References cited:
- GB-A- 770 078
- US-A1- 2003 190 837
- US-A1- 2004 157 116
- US-A1- 2006 040 172

## Description

### BACKGROUND OF THE INVENTION

### Field Of The Invention

The present invention relates to a battery accommodation structure and a battery accommodation method, and for example, relates to a structure and a method for, in a device or the like using batteries as a power source, accommodating the batteries.

### BACKGROUND AND SUMMARY

For example, as shown in Japanese Unexamined Patent Application Publication No. 2002-100336 (hereinafter referred to as "Patent Literature 1"), there is a device for accommodating batteries such as dry cell batteries to use the batteries as a power source. The device includes an accommodation portion for accommodating and holding batteries. For example, in this battery accommodation structure disclosed in Patent Literature 1, after a battery has been accommodated such that both electrodes of the battery are connected to terminals, a cover is attached to cover the battery.

The battery accommodation structure disclosed in Patent Literature 1, however, is a structure where a cover to be attached after the accommodation of a battery and the outer peripheral surface of the battery are caused to abut each other, thereby supporting the accommodated battery. Thus, to stably hold the accommodated battery, it is necessary to provide a predetermined holding member between the cover and the battery, or design a cover that abuts the outer peripheral surface of the battery.

US 2003/190837 A1 discloses a battery holder which comprises an insulative housing defining a receiving space for receiving a battery and a pair of negative and positive conductive contacts fastened to opposite ends of the housing. Each of the negative and positive conductive contacts forms a base section, a spring arm extending from one end of the base section for electrically connecting with a corresponding negative or positive terminal of the battery, and a soldering tail extending from another end of the base section for soldering to a circuit board. Furthermore, one of the first and second conductive contacts forms a pair of clip members extending from opposite sides of the base section for conductively abutting against an outer surface of the battery for preventing the battery from moving or offsetting under variation situations.

### SUMMARY OF THE INVENTION

Therefore, it is an object of the present invention to provide a battery accommodation structure and a battery accommodation method that can reduce the costs of the provision of a holding member or the like. The invention is defined by the independent claims. The dependent claims define advantageous embodiments.

To achieve the above object, the present invention can employ, for example, the following configurations. It should be noted that it is understood that, to interpret the descriptions of the claims, the scope of the claims should be interpreted only by the descriptions of the claims. If there is a conflict between the descriptions of the claims and the descriptions of the specification, the descriptions of the claims take precedence.

An exemplary configuration of a battery accommodation structure according to the present invention accommodates a battery. The battery accommodation structure includes, in an accommodation case configured to accommodate the battery, a positive electrode terminal, a negative electrode terminal, and a clamping spring. The positive electrode terminal is connected to a positive electrode of the battery. The negative electrode terminal is connected to a negative electrode of the battery. The clamping spring is provided between the positive electrode terminal and the negative electrode terminal and clamps a part of an outer peripheral surface of the battery.

Based on the above, the accommodated battery is clamped by the clamping spring provided in the accommodation case. This eliminates the need to support the battery with a cover to be attached after the accommodation of the battery, using a holding member or the like. This can reduce costs to be required for the holding member or the like.

Further, the negative electrode terminal may include a terminal spring. In this case, the clamping spring may be provided in an accommodation space in the accommodation case on the positive electrode terminal side, the accommodation space formed between the positive electrode terminal and the negative electrode terminal.

Further, the clamping spring may be provided at a position where the clamping spring clamps an outer peripheral surface of a part closest to the positive electrode among parts obtained by dividing the battery accommodated in the accommodation case into quarters in a longitudinal direction.

Based on the above, a biasing force is applied to the accommodated battery, whereby it is possible to stably connect to the positive electrode terminal and the negative electrode terminal. Further, the clamping spring is placed at a position away from the terminal spring. This distributes the resisting forces for accommodating and detaching the battery. This facilitates the work of installing the battery and the work of detaching the battery. Further, if the negative electrode terminal includes a terminal spring, the positive electrode side of the assembled battery is more likely to be detached than the negative electrode side. The positive electrode side of the battery, however, is fixed by the clamping spring, whereby it is possible to stably accommodate the battery in the accommodation case.

Further, the negative electrode terminal may include a torsion spring.

Based on the above, the negative electrode terminal includes a torsion spring, whereby it is possible to stably connect to the positive electrode terminal and the negative electrode terminal by applying a biasing force to the accommodated battery. Further, it is possible to attach the battery into the accommodation case by inserting the positive electrode terminal side first, which is provided so as to oppose the negative electrode terminal, and also possible to attach the battery into the accommodation case by inserting the negative electrode terminal side first.

Further, the clamping spring includes a supporting spring. The supporting spring, in an inner surface thereof clamping the battery by abutting an outer peripheral surface of the battery on both sides, protrudes further inward than the inner surface from a lower portion of the inner surface to support the outer peripheral surface of the battery in an upward direction from the lower portion.

Based on the above, even if a battery having an outer diameter smaller than the inner dimension of the clamping spring is attached, the supporting spring supports the battery. This makes it possible to stably accommodate the battery.

Further, a cover configured to detachably cover the accommodated battery may be further included. If the cover has been attached, an inner surface of the cover may abut at least a part of an outer surface of the clamping spring.

Based on the above, the accommodated battery is firmly clamped by the clamping spring. This makes it possible to accommodate the battery more stably.

An exemplary configuration of a battery accommodation method according to the present invention accommodates a battery. The battery accommodation method electrically connects electrodes of a battery to be accommodated to a positive electrode terminal and a negative electrode terminal by fitting the electrodes between the positive electrode terminal and the negative electrode terminal, and accommodates the battery in the accommodation case by clamping a part of the outer peripheral surface of the battery with a clamping spring.

Based on the above, the accommodated battery is clamped by the clamping spring provided in the accommodation case. This eliminates the need to support the battery with a cover to be attached after the accommodation of the battery, using a holding member or the like. This can reduce costs to be required for the holding member or the like.

According to the present invention, the accommodated battery is clamped by the clamping spring provided in the accommodation case. This eliminates the need to support the battery with a cover to be attached after the accommodation of the battery, using a holding member or the like. This can reduce costs to be required for the holding member or the like.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is an external perspective view of an example of a device 1 having a battery accommodation structure according to an example of the present embodiment;
FIG. 2 is an external perspective view of an example of the inside of the device 1 from which a rear end housing 3 has been detached;
FIG. 3 is an external perspective view of an example of the state where batteries have been attached to the device 1;
FIG. 4 is an external perspective view of an example of the state where a slider 20 has been detached from the device 1;
FIG. 5 is a diagram illustrating an example of the procedure of installing batteries into the device 1;
FIG. 6 is a vertical cross-sectional view of an example of the internal structure of the device 1;
FIG. 7A is an external view of an example of the inside of the device 1 as viewed from above when the rear end housing 3 has been detached from the device 1;
FIG. 7B is a cross-sectional view along an example of a cross section AA in the device 1 in FIG. 7A;
FIG. 7C is a cross-sectional view along an example of a cross section BB in the device 1 in FIG. 7A;
FIG. 7D is a cross-sectional perspective view of an example of the state where the device 1 in FIG. 7A has been cut along the cross section BB and a part of the slider 20 has been further cut;
FIG. 8A is an external top view of an example of the slider 20 in which a notched spring 29 is provided;
FIG. 8B is an external perspective view of an example of the slider 20 in which the notched spring 29 is provided; and
FIG. 9 is a diagram showing an example of the state of a partition portion that can be displaced to be buried in a wall surface of an accommodation case and to stand in a battery accommodation space from the wall surface.

### DETAILED DESCRIPTION OF THE PREFERRED EMBODIMENTS

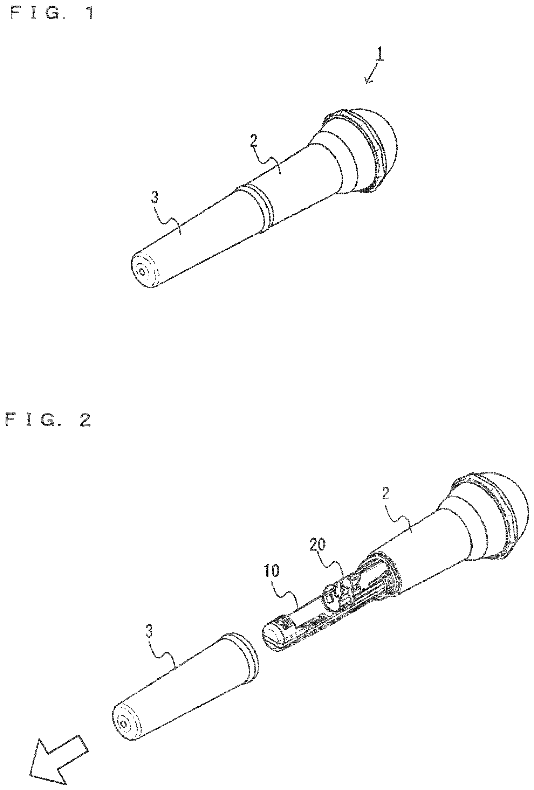

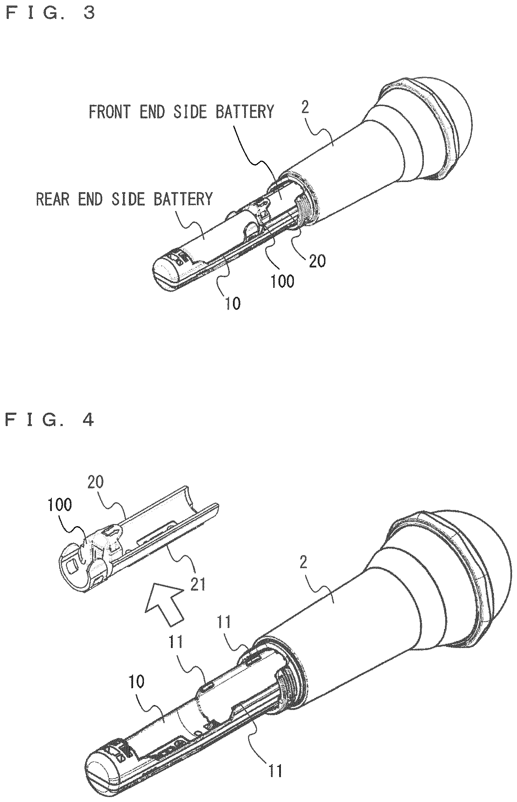

With reference to FIGS. 1 to 4, a battery accommodation structure according to an example of the present embodiment is described. It should be noted that FIG. 1 is an external perspective view of an example of a device 1 having the battery accommodation structure. FIG. 2 is an external perspective view of an example of the inside of the device 1 from which a rear end housing 3 has been detached. FIG. 3 is an external perspective view of an example of the state where batteries have been attached to the device 1. FIG. 4 is an external perspective view of an example of the state where a slider 20 has been detached from the device 1. For example, the device 1 is an electrical device, an electronic device, or the like that uses batteries as a power source. It should be noted that in the present embodiment, the device 1 is described using a wireless microphone as an example.

In FIGS. 1 and 2, the device 1 includes a main body 2 and a rear end housing 3. The rear end housing 3 is formed into a generally cylindrical shape, one end of which is closed. The rear end housing 3 is configured to be attachable to and detachable from the main body 2.

The main body 2 includes a battery accommodation portion having a battery accommodation structure for accommodating batteries that serve as a power source for the device 1. The battery accommodation portion generally includes an accommodation case 10 and a slider 20. For example, the accommodation case 10 and the slider 20 are formed of an ABS (acrylonitrile-butadiene-styrene) resin. It should be noted that the accommodation case 10 and the slider 20 may be formed of another thermoplastic resin, or may be formed of another resin such as a thermosetting resin. If the rear end housing 3 has been detached from the main body 2, the upper surface of a part of the battery accommodation portion is open to the outside (the state of FIG. 2). Further, if the rear end housing 3 has been attached to the main body 2, the part of the battery accommodation portion that is openable to the outside is accommodated within a hollow space of the rear end housing 3 (the state of FIG. 1).

As shown in FIGS. 2 to 4, the accommodation case 10 is formed of a semicylindrical member capable of accommodating within itself batteries of predetermined shapes, and is fixedly provided in the main body 2. Specifically, the device 1 is configured to allow two batteries to be attached thereto as a power source, and the accommodation case 10 accommodates two batteries.

The slider 20 is formed of a semicylindrical member capable of accommodating within itself batteries of predetermined shapes, and is configured to be slidable along the cylindrical inner surface of the accommodation case 10 in the long axis direction (hereinafter referred to as a "front-back direction") of the device 1. Specifically, the slider 20 accommodates, between the two batteries, the battery (a front end side battery) on the front end side of the device 1, and the size of the slider 20 is such that entire semicylindrical inner surface of the slider 20 is in contact with the outer surface of the front end side battery. Further, the slider 20 is so formed that the cylindrical outer surface of the slider 20 is slidable along the cylindrical inner surface of the semi cylindrical shape member of the accommodation case 10 in the front-back direction while fitting the cylindrical inner surface.

As shown in FIG. 4, on the rear end side of the slider 20, a division wall 100 is formed, which supports the rear end of a front end side battery with the front end side battery installed. As is clear from FIG. 3, if a front end side battery and a rear end side battery have been installed into the battery accommodation portion, the division wall 100 is sandwiched between the front end side battery and the rear end side battery and has the function of partitioning an electrode (for example, a negative electrode) of the front end side battery and an electrode (for example, a positive electrode) of the rear end side battery, and electrically connecting these electrodes together via predetermined terminals (a front end side negative electrode terminal 23 and a rear end side positive electrode terminal plate 24 described later).

Further, as shown in FIG. 4, on the cylindrical inner surface of the accommodation case 10, a plurality of claw portions 11, which are so shaped as to protrude toward the center of the cylinder, are formed at positions arranged in the front-back direction. Then, the slider 20 is attached to the accommodation case 10 such that the semicylindrical outer surface of the slider 20 is in contact with the semicylindrical inner surface of the accommodation case 10 below the positions of the plurality of claw portions 11. It should be noted that each of the plurality of claw portions 11 protrudes toward the center of the cylinder from the cylindrical inner surface of the accommodation case 10, and therefore, when the slider 20 slides in the front-back direction, functions as a guide that prevents the slider 20 from coming off upward, to which the accommodation case 10 is open.

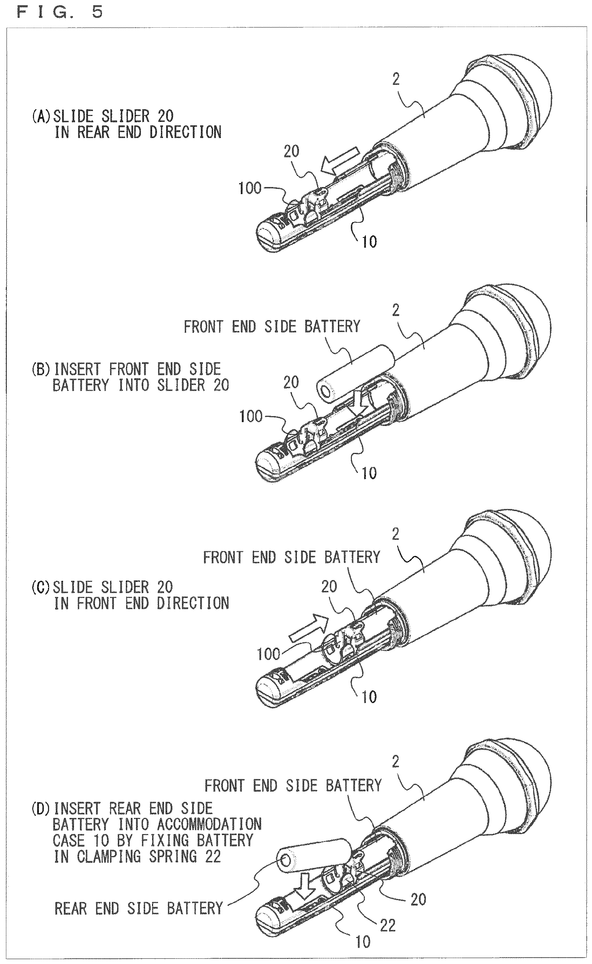

Next, with reference to FIG. 5, the procedure of installing batteries into the device 1 is described. It should be noted that FIG. 5 is a diagram illustrating an example of the procedure of installing batteries into the device 1.

In FIG. 5, when batteries (for example, size AA batteries) are installed into the device 1, the rear end housing 3 is detached from the main body 2 as shown in FIG. 2, so that a part of an upper portion of the battery accommodation portion is open. Then, the slider 20 is slid along the inner surface of the accommodation case 10 in the rear end direction (backward), so that the semicylindrical inner surface for accommodating a front end side battery in the slider 20 is exposed to the outside through the opening of the battery accommodation portion (the state of (A) of FIG. 5).

Next, a front end side battery is inserted and installed into the slider 20 through the opening (see (B) of FIG. 5). At this time, the size of the slider 20 is such that the semicylindrical inner surface of the slider 20 is in contact with the outer surface of the front end side battery, and therefore, the inserted front end side battery is placed in contact with the approximate entirety of the semicylindrical inner surface of the slider 20, or in contact with the semicylindrical inner surface of the slider 20 with a predetermined clearance therebetween. Thus, with the slider 20 slid to the rear end side of the accommodation case 10, it is possible to freely put and take the front end side battery in and out of the slider 20. Further, as an example, the front end side battery is installed into the slider 20 such that the negative electrode of the front end side battery is placed on the rear end side. This enables the negative electrode of the front end side battery to come into contact with a terminal (the front end side negative electrode terminal 23 described later) provided in the division wall 100 and having a coiled terminal spring.

Next, with the front end side battery installed, the slider 20 is slid along the inner surface of the accommodation case 10 in the front end direction (forward) (see (C) of FIG. 5). Thus, parts of the slider 20 and the front end side battery are inserted together into the main body 2. It should be noted that as will be apparent later, the slider 20 is slidable in the forward direction to a position where an electrode (for example, a positive electrode) of the installed front end side battery comes into contact with a front end side positive electrode terminal plate 31 provided in the main body 2. Then, a front portion of the slider 20 abuts the main body 2 with the positive electrode of the front end side battery in contact with the front end side positive electrode terminal plate 31, whereby the slider 20 is slidable to the innermost position in the forward direction. Then, if the slider 20 has been moved to the innermost position, a front end portion (for example, an approximate half in the forward direction) of the slider 20 and a positive electrode side portion (for example, an approximate half on the positive electrode side) of the front end side battery are inserted together into the main body 2. Then, if the slider 20 has been slid to the innermost position with the front end side battery installed, a space for inserting a rear end side battery is formed between the division wall 100 of the slider 20 and the rear end of the accommodation case 10.

Next, a rear end side battery is inserted and installed into the accommodation case 10 through the opening (see (D) of FIG. 5). Here, on the rear end side of the division wall 100 of the slider 20, a clamping spring 22 is provided, so that the rear end side battery is inserted by clamping it with the clamping spring 22 to fit it. Further, at the rear end of the accommodation case 10, a rear end side negative electrode terminal 12 having a torsion spring is provided, so that the negative electrode of the rear end side battery and the rear end side negative electrode terminal 12 are brought into contact with each other, and the torsion spring is caused to contract, thereby inserting the rear end side battery. Further, the slider 20 is placed such that the division wall 100 is pressed to the rear end side by the biasing force of a coiled terminal spring included in the front end side negative electrode terminal 23. Thus, the positive electrode of the rear end side battery and the rear end side positive electrode terminal plate 24 provided in the division wall 100 are brought into contact with each other, and the terminal spring is caused to contract, thereby inserting the rear end side battery. Thus, if installed into the accommodation case 10, the rear end side battery is clamped by the clamping spring 22 in the up, down, left, and right directions and is fixed at a position in the front-back direction where the biasing force of the torsion spring included in the rear end side negative electrode terminal 12 and the biasing force of the terminal spring included in the front end side negative electrode terminal 23 are balanced. It should be noted that a description will be given later of a detailed mechanism in which the batteries installed into the battery accommodation portion of the device 1 are fixed in the battery accommodation portion.

It should be noted that the rear end side battery is installed into the accommodation case 10 such that the negative electrode of the rear end side battery is placed on the rear end side, in which case, the front end side of the rear end side battery is clamped by the clamping spring 22, and the rear end side of the rear end side battery is supported by the torsion spring. Here, the torsion spring is a spring member used by being subjected to the moment of force (the torque) about the coil axis. The battery to be installed may be moved downward from above, whereby the torsion spring can be caused to contract in the backward direction and twisted. Alternatively, the battery to be installed may be moved from the forward direction to the backward direction, whereby the torsion spring can be caused to contract in the backward direction and twisted. Thus, the rear end side battery can be inserted such that its positive electrode side is inserted first, or its negative electrode side is inserted first. For example, as shown in (D) of FIG. 5, while the positive electrode of the rear end side battery and the rear end side positive electrode terminal plate 24 are brought into contact with each other, the positive electrode side of the rear end side battery may be clamped by the clamping spring 22, thereby inserting the positive electrode side of the rear end side battery into the accommodation case 10. Then, while the negative electrode side of the rear end side battery and the torsion spring are brought into contact with each other, the negative electrode side of the rear end side battery and the torsion spring may be pushed downward, whereby the torsion spring may be caused to contract in the backward direction and twisted. Then, the negative electrode side of the rear end side battery may be inserted and installed into the accommodation case 10. Alternatively, with the negative electrode of the rear end side battery and the torsion spring in contact with each other, the negative electrode of the rear end side battery and the torsion spring may be moved from the forward direction to the backward direction, whereby the torsion spring may be caused to contract in the backward direction and twisted. Then, the negative electrode side of the rear end side battery may be inserted into the accommodation case 10. Then, the positive electrode side of the rear end side battery may be clamped by the clamping spring 22, and the positive electrode side of the rear end side battery may be inserted and installed into the accommodation case 10.

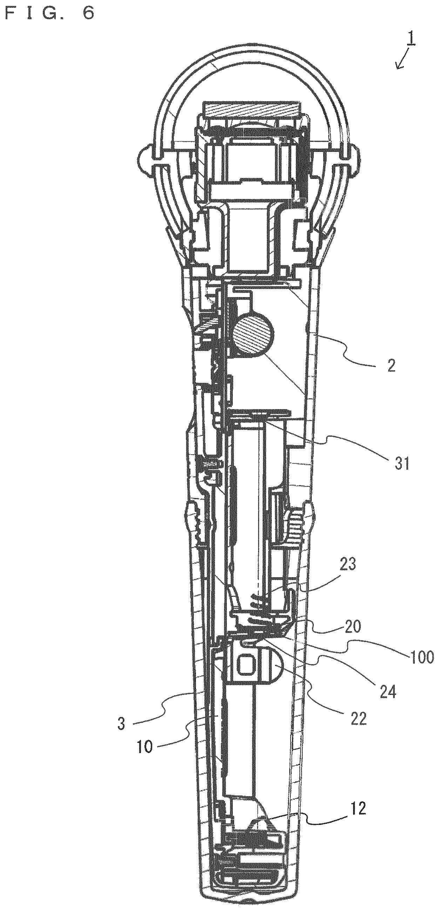

Next, with reference to FIG. 6, a description is give of the structure where the batteries installed into the battery accommodation portion of the device 1 are fixed so as to be arranged in the front-back direction. It should be noted that FIG. 6 is a vertical cross-sectional view of an example of the internal structure of the device 1.

In FIG. 6, the front end side positive electrode terminal plate 31 is provided inside the main body 2 at a position where the front end side positive electrode terminal plate 31 abuts the positive electrode of the front end side battery installed into the slider 20. For example, the front end side positive electrode terminal plate 31 is formed of a metal plate material having a protruding portion for abutting the positive electrode of the front end side battery, and is fixedly provided inside the main body 2. Further, in the division wall 100 of the slider 20, the front end side negative electrode terminal 23 and the rear end side positive electrode terminal plate 24 are provided. The rear end side of the front end side negative electrode terminal 23 and the front end side of the rear end side positive electrode terminal plate 24 are joined so as to be electrically connected together, and are fixedly provided in the division wall 100 in the joined state. For example, the front end side negative electrode terminal 23 includes a coiled terminal spring expandable and contractible in the front-back direction, and is provided, in the state of being fixed in the division wall 100, at a position where the front end side of the terminal spring and the negative electrode of the front end side battery come into contact with each other. The rear end side positive electrode terminal plate 24 is formed of a metal plate material having a protruding portion for abutting the positive electrode of the rear end side battery, and is provided, in the state of being fixed in the division wall 100, at a position where the rear end side protruding surface and the positive electrode of the front end side battery come into contact with each other. Further, at the rear end of the accommodation case 10, the rear end side negative electrode terminal 12 is provided at a position where the rear end side negative electrode terminal 12 comes into contact with the negative electrode of the rear end side battery installed into the accommodation case 10. For example, the rear end side negative electrode terminal 12 includes a torsion spring (a torsion coil spring) having a biasing force in the forward direction, and is provided, in the state of being fixed in a rear end portion of the accommodation case 10, at a position where the front end side of the torsion spring and the negative electrode of the rear end side battery come into contact with each other. It should be noted that the front end side positive electrode terminal plate 31 and the rear end side negative electrode terminal 12 may be formed of commonly used brass. However, the terminals (the front end side negative electrode terminal 23 and the rear end side positive electrode terminal plate 24) placed between the front end side battery and the rear end side battery may be formed of stainless steel or the like, which has a relatively high strength, in order to improve the durability against the stress generated by swinging the device 1. Alternatively, the torsion spring may be formed of two components, namely a spring member and plate metal, such that the spring member is formed of stainless steel, and the plate metal is formed of brass.

The front end side battery installed into the battery accommodation portion of the device 1 is placed such that the positive electrode of the front end side battery is in contact with the protruding surface of the front end side positive electrode terminal plate 31, and the negative electrode of the front end side battery is in contact with the front end side negative electrode terminal 23. Further, the rear end side battery installed into the battery accommodation portion of the device 1 is placed such that the positive electrode of the rear end side battery is in contact with the protruding surface of the rear end side positive electrode terminal plate 24, and the negative electrode of the rear end side battery is in contact with the rear end side negative electrode terminal 12. Here, the terminal spring included in the front end side negative electrode terminal 23 abuts the negative electrode of the front end side battery in a contracting state, and the torsion spring included in the rear end side negative electrode terminal 12 abuts the negative electrode of the rear end side battery such that the torsion spring is twisted in the backward direction and has a biasing force in the forward direction. Thus, the front end side battery and the rear end side battery are placed so as to be biased by the biasing force of the terminal spring included in the front end side negative electrode terminal 23 and the biasing force of the torsion spring included in the rear end side negative electrode terminal 12, and are placed at positions where the biasing forces are balanced. That is, a plurality of batteries are supported by a plurality of spring members, and therefore, it is possible to equalize the biasing forces acting on the batteries. Further, the front end side battery and the rear end side battery are connected together via the front end side negative electrode terminal 23 and the rear end side positive electrode terminal plate 24, and therefore, the batteries are not directly connected together. This can prevent the reduction in the durability or the like due to the fact that the batteries interfere with each other by an external shock, for example.

Further, the negative electrode of the front end side battery is connected to the coiled terminal spring, and therefore, the procedure of installing the front end side battery is such that its negative electrode side is inserted first, and then, its positive electrode side is fit in. On the other hand, the negative electrode of the rear end side battery is connected to the negative electrode terminal including the torsion spring, and therefore, the procedure of installing the rear end side battery may be such that its negative electrode side is inserted first, and then, its positive electrode side is fit in, or may be such that its positive electrode side is inserted first, and then, its negative electrode side is fit in.

Here, the torsion spring used as the rear end side negative electrode terminal 12 is configured such that the biasing force per unit length in the backward direction caused by the rear end side battery pressing the torsion spring is larger than the biasing force per unit length caused by the expansion and contraction of the terminal spring used as the front end side negative electrode terminal 23. This makes it possible to certainly slide the slider 20 to the innermost position and certainly fix the slider 20 at the innermost position, which enables the fixing of the division wall 100 always at the same position (that is, each of the front end side battery and the rear end side battery always at the same position) when the batteries have been installed.

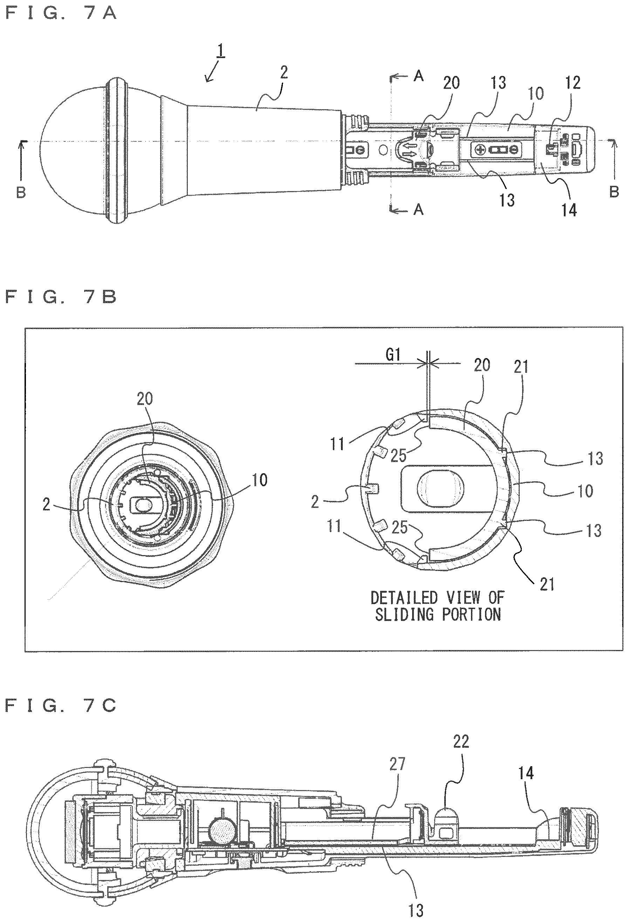

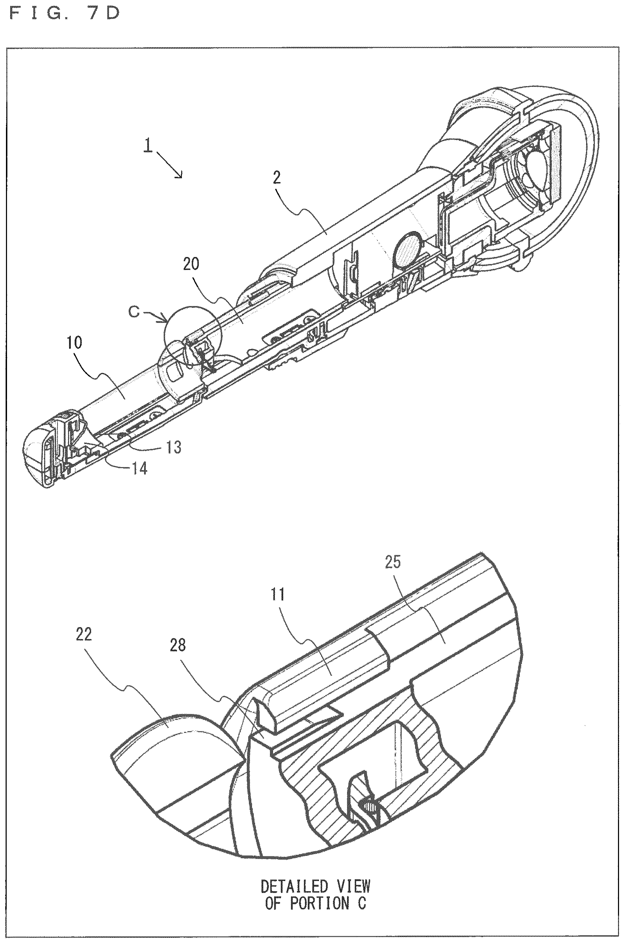

Next, with reference to FIGS. 7A to 7D, a description is given of the structure where the slider 20 slides along the accommodation case 10 and the structure where the batteries installed into the battery accommodation portion are fixed in the up, down, left, and right directions. It should be noted that FIG. 7A is an external view of an example of the inside of the device 1 as viewed from above when the rear end housing 3 of the device 1 has been detached from the device 1. FIG. 7B is a cross-sectional view along an example of a cross section AA in the device 1 in FIG. 7A. FIG. 7C is a cross-sectional view along an example of a cross section BB in the device 1 in FIG. 7A. FIG. 7D is a cross-sectional perspective view of an example of the state where the device 1 in FIG. 7A has been cut along the cross section BB and a part of the slider 20 has been further cut.

In FIGS. 7A to 7D, in a bottom portion of the semicylindrical outer surface of the slider 20, two protruding lines 21 extend in the front-back direction. Further, in a bottom portion of the semicylindrical inner surface of the accommodation case 10, two line grooves 13 are formed in the front-back direction so that the protruding lines 21 can slide in the two line grooves 13. Then, with the slider 20 attached in the accommodation case 10, the protruding lines 21 are engaged with the line grooves 13. The protruding lines 21 slide in the state of being engaged with the line grooves 13, whereby the slider 20 slides in the front-back direction in the accommodation case 10.

Further, as shown in a detailed view of a sliding portion in FIG. 7B, in the state where the slider 20 is sliding in the front-back direction in the accommodation case 10 with the protruding lines 21 and the line grooves 13 engaged with each other, a gap G1 is formed between the claw portions 11, which are arranged next to each other in the front-back direction, and upper surface end portions 25 of the slider 20. Thus, when the slider 20 is slid in the accommodation case 10, the slider 20 is not pressed downward by the claw portions 11. This makes it possible to move the slider 20 in a sliding manner in the front-back direction without generating a great resisting force.

Meanwhile, as shown in a detailed view of a portion C in FIG. 7D, if the slider 20 has been placed in the innermost position, a stepped portion 28 is formed in a part of the upper surface end portion 25 of the slider 20 that is located below the claw portion 11 formed furthest in the backward direction. It should be noted that FIG. 7D shows only the stepped portion 28 provided on the left in the forward direction for ease of description. A similar stepped portion 28, however, is also formed on the right in the forward direction in a part of the upper surface end portion 25 of the slider 20. Each stepped portion 28 is formed to be higher than the other parts of the upper surface end portion 25 of the slider 20 such that the upward protrusion of the stepped portion 28 has a dimension equal to or greater than the gap G1. Thus, if the slider 20 has slid to the innermost position, the left and right claw portions 11 formed furthest in the backward direction abut the stepped portions 28, and the slider 20 is pressed against the bottom portion (for example, the line grooves 13) of the accommodation case 10. Consequently, if the slider 20 has slid to the innermost position with the front end side battery assembled, the slider 20 is fixed by the claw portions 11 in the up-down direction in the accommodation case 10.

If the front end side battery assembled in the slider 20 has been slid to the innermost position, a lower part of the outer peripheral surface of the front end side battery is in contact with a semicylindrical inner surface bottom portion 27 of the slider 20 with the positive electrode and the negative electrode of the front end side battery in contact with the front end side positive electrode terminal plate 31 and the front end side negative electrode terminal 23, respectively. Then, an upper part of the outer peripheral surface of the front end side battery assembled in the slider 20 is pressed downward while abutting a part of the inner wall surface of the main body 2. Thus, if the front end side battery assembled in the slider 20 has been slid to the innermost position, the outer peripheral surface of the front end side battery is sandwiched between the inner wall surface of the main body 2 and the semicylindrical inner surface bottom portion 27 of the slider 20. Thus, the front end side battery is fixed in the up, down, left, and right directions in the device 1.

In the rear end side battery assembled in the accommodation case 10, the outer peripheral surface of the rear end side battery is clamped by the clamping spring 22 on the forward side with the positive electrode and the negative electrode of the rear end side battery in contact with the rear end side positive electrode terminal plate 24 and the rear end side negative electrode terminal 12, respectively. Here, the clamping spring 22 clamps the rear end side battery in the up, down, left, and right directions, and therefore can fix the rear end side battery by pressing it against the bottom surface of the accommodation case 10. Further, in a rear end bottom portion of the accommodation case 10, a rear end side battery mounting surface 14 is formed. The rear end side battery mounting surface 14 is formed into an arcuate surface of the same shape as a part of the inner surface of the clamping spring 22 and also formed as high as the inner surface of the clamping spring 22, and is formed upward to be higher than the bottom portion of the accommodation case 10, in which the line grooves 13 are formed. Thus, a front portion of a lower part of the outer peripheral surface of the rear end side battery abuts the inner surface of the clamping spring 22, and a rear portion of the lower part abuts the rear end side battery mounting surface 14. Thus, the rear end side battery is assembled in a stable orientation in the accommodation case 10. As described above, the clamping spring 22 fixes the rear end side battery in the direction of pressing it against the bottom surface of the accommodation case 10. This makes it possible to stably fix the rear end side battery while abutting the inner surface of the clamping spring 22 and the rear end side battery mounting surface 14 by the clamping force of the clamping spring 22. The rear end side battery is thus clamped by the clamping spring 22. This eliminates the need for a mechanism for fixing the rear end side battery by further causing the rear end side battery to abut another member. For example, if the rear end housing 3 according to the present embodiment is generally conical, it is very difficult to achieve a mechanism for fixing the rear end side battery by causing the rear end housing 3 and the rear end side battery to abut each other. Even without such a mechanism, however, it is possible to stably support the rear end side battery with the clamping spring 22. Further, in the case of a general battery case, there is a need for a mechanism for fixing a battery to be accommodated by causing the battery case to abut the battery to be accommodated while causing a cover of the battery case to abut the battery to be accommodated with a predetermined holding member therebetween. The battery to be accommodated, however, may be clamped by the clamping spring 22. This eliminates the need for a battery holding mechanism using such a holding member. This makes it possible to stably hold the accommodated battery while reducing costs.

It should be noted that although not shown in the figures, if the rear end housing 3 has been attached to the main body 2, the inner wall surface of the rear end housing 3 and the outer peripheral surface of the clamping spring 22 may abut each other, thereby applying to the clamping spring 22 a force in the direction of causing the clamping spring 22 to contract in the axial direction of the rear end housing 3. Consequently, if the rear end housing 3 has been attached to the main body 2, the force of the clamping spring 22 clamping the rear end side battery further increases, and the rear end side battery is assembled more stably in the accommodation case 10.

Further, the clamping spring 22 may be provided at a position where the clamping spring 22 can clamp the outer peripheral surface of the rear end side battery to be accommodated near the positive electrode of the rear end side battery (for example, the part closest to the positive electrode among the parts obtained by dividing the rear end side battery into quarters in the longitudinal direction). In this case, the clamping spring 22 and the rear end side battery mounting surface 14 can support a lower portion of the outer peripheral surface of the rear end side battery on the positive electrode side and a lower portion of the outer peripheral surface on the negative electrode side, respectively. The support for the lower portions of the rear end side battery on both sides makes it possible to stably accommodate the rear end side battery. Further, even if the rear end side negative electrode terminal 12 includes a coiled terminal spring, it is possible to easily fit the positive electrode side of the rear end side battery into the clamping spring 22 after installing the negative electrode side of the rear end side battery into the accommodation case 10. Further, if the rear end side negative electrode terminal 12 includes a terminal spring, the positive electrode side of the assembled rear end side battery is more likely to come off upward than the negative electrode side. The clamping spring 22, however, fixes the positive electrode side of the rear end side battery in the accommodation case 10, whereby it is possible to stably accommodate the rear end side battery in the accommodation case 10. Further, the resisting force caused when the positive electrode side of the rear end side battery is fit into the clamping spring 22, the resisting force for causing the torsion spring of the rear end side negative electrode terminal 12 to contract by the negative electrode side of the rear end side battery, and the resisting force caused when the rear end side battery is detached may be distributed, whereby it is also possible to reduce the resisting force caused when the rear end side battery is installed.

As described above, in the battery accommodation structure described above, in the accommodation case 10, a partition portion for partitioning a first accommodation space for accommodating the front end side battery and a second accommodation space for accommodating the rear end side battery to connect the batteries is movable, whereby it is possible to minimize an opening portion for installing the batteries. For example, in an example of the battery accommodation structure described above, even if two batteries are accommodated so as to be arranged in series in the longitudinal direction, only the provision of an opening portion of a size slightly larger than a single battery makes it possible to accommodate both batteries.

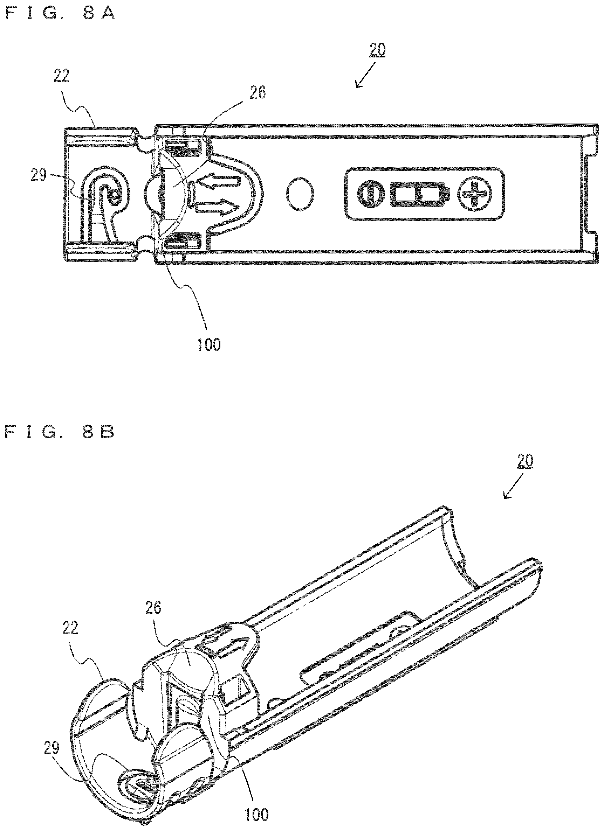

It should be noted that on the surface of the clamping spring 22 that clamps the rear end side battery, a mechanism (for example, a supporting spring) having a spring action for supporting the rear end side battery from below may be further provided. For example, as shown in FIGS. 8A and 8B, on the surface of the clamping spring 22 that clamps the rear end side battery, a notched spring 29 (a supporting spring) may be provided. It should be noted that FIG. 8A is an external top view of an example of the slider 20 in which the notched spring 29 is provided. FIG. 8B is an external perspective view of an example of the slider 20 in which the notched spring 29 is provided.

In FIGS. 8A and 8B, the notched spring 29 is formed by notching a part of the surface of the clamping spring 22 that clamps the rear end side battery, into a generally J-shape. Then, the notched spring 29 is so formed that the J-shaped portion protrudes further inward than the inner surface of the clamping spring 22 in contact with the rear end side battery. Consequently, the notched spring 29 has the function of giving a biasing force for pushing upward the rear end side battery clamped by the clamping spring 22. Thus, the force of the clamping spring 22 clamping the rear end side battery further increases by the biasing force of the notched spring 29. This makes it possible to accommodate the rear end side battery more stably. Further, also if rattling occurs between the outer peripheral surface of the rear end side battery and the inner surface of the clamping spring 22 due to variations in outer diameter of the rear end side battery or the like, the provision of the notched spring 29 can prevent the rattling.

Further, the configuration may be such that the supporting spring enables the clamping spring 22 to support batteries having different sizes. As an example, the inner surface of the clamping spring 22 may be formed into a shape that matches the outer peripheral surface of a size AA battery. Then, the protruding height of the supporting spring that protrudes further inward than the inner surface of the clamping spring 22 may be set such that the space surrounded by the supporting spring and the clamping spring 22 is formed into a shape that matches the outer peripheral surface of an AAA battery. This enables the clamping spring 22 to support a size AA battery, and enables the same clamping spring 22 to also support an AAA battery. It should be noted that a size AA battery and an AAA battery are different from each other not only in outer diameter but also in length in the longitudinal direction. The difference in length, however, may be adjusted by the expansion and contraction of the spring member included in the terminal connected to the batteries.

Further, as shown in FIGS. 8A and 8B, a guide slope 26 may be formed on the upper surface of the division wall 100 of the slider 20. For example, the guide slope 26 is formed as a planar surface or a curved surface inclined from the front end side to the rear end side of the slider 20. If the guide slope 26 is formed on the upper surface of the division wall 100, it is possible to insert the rear end side battery into the accommodation case 10 while sliding the positive electrode side of the rear end side battery on the inclined surface of the guide slope 26. For example, when the rear end side battery is inserted, even if the slider 20 is placed on the rear end side by the force of gravity or the biasing force of the terminal spring included in the front end side negative electrode terminal 23, the rear end side battery may be inserted while being guided by the guide slope 26. Thus, the rear end side battery is installed while the slider 20 moves in a sliding manner to the front end side. This eliminates the need for the work of moving the slider 20 to the front end side in advance to expand a space for the insertion of the rear end side battery in a pushing manner.

Further, the above present embodiment has been described using an example where a movable partition portion (the division wall 100) for partitioning the accommodation case 10 into the first accommodation space for accommodating the front end side battery and the second accommodation space for accommodating the rear end side battery is slid in the longitudinal direction (the front-back direction) of the batteries, thereby changing the size of the first accommodation space. Alternatively, the partition portion may be moved in another direction, thereby achieving a similar function.

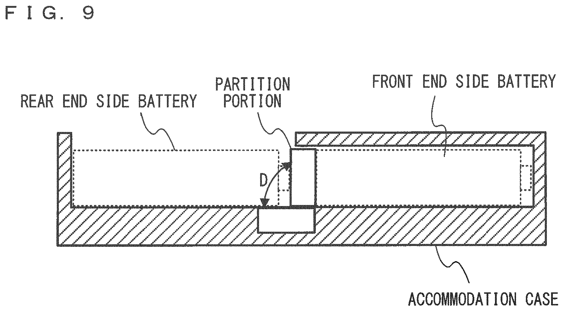

As a first example, as shown in FIG. 9, also a partition portion that can be displaced to be buried in a wall surface of a accommodation case and to stand in a battery accommodation space from the wall surface can achieve a similar function. As an example, the partition portion is displaced to be buried and to stand by pivoting in a direction D shown in FIG. 9. Then, the front end side battery may be inserted into the innermost portion of the accommodation case (to the right in FIG. 9) with the partition portion buried, and after the partition portion has pivot to stand, the rear end side battery may be inserted and assembled into the near side of the accommodation case (to the left in FIG. 9). This makes it possible to achieve a battery accommodation structure where an opening portion is made as small as possible in a similar manner.

As a second example, the structure may be such that a movable partition portion for partitioning a first accommodation space and a second accommodation space is moved in the front-back direction by rotating the partition portion about the axial direction of the batteries to be accommodated. As an example, a member for holding the front end side battery may be engaged with the main body, whereby it is possible to move the front end side battery by screwing the front end side battery together with the member for holding it to the front end side. This makes it possible to achieve a battery accommodation structure according to the second example.

As a third example, the structure may be such that a plurality of batteries are accommodated so as to be arranged side by side. In this case, a first accommodation space and a second accommodation space are provided so as to be arranged on either side, and a movable partition portion for partitioning the first accommodation space and the second accommodation space slides in the short direction (the left-right direction) of the batteries. This makes it possible to achieve a battery accommodation structure where after one battery (for example, a right battery) has been accommodated, the one battery is moved to the first accommodation space (for example, moved to the right) together with the partition portion, and the other battery (for example, a left battery) is accommodated in the second accommodation space emptied by the movement of the one battery.

Further, in the above present embodiment, the configuration is such that the slider 20 is slid, thereby allowing a plurality of batteries to be accommodated in the accommodation case 10. To obtain only the effect of supporting batteries with the clamping spring 22, however, a battery accommodation structure for accommodating a single battery may be used. In this case, the battery accommodation structure includes an accommodation case in which a terminal and a terminal spring to be connected to an electrode of a battery to be accommodated are provided at its front and rear ends and which can accommodate a single battery, and a clamping spring provided in the accommodation case. It should be noted that in the battery accommodation structure, a terminal spring provided in the accommodation case typically has the function of connecting to the negative electrode of a battery to be accommodated. Alternatively, the battery accommodation structure may include a torsion spring (a twisted spring), or may include a coiled terminal spring or the like.

Further, it goes without saying that the shapes of components, the materials of components, the number of components, the placement positions of components, the functions of components, and the like used in the battery accommodation mechanism described above are merely illustrative, and may be other shapes, materials, numbers, and placement positions, and other functions may also be able to achieve the present embodiment. For example, a description has been given using an example where the rear end side negative electrode terminal 12 includes a torsion spring. Alternatively, the rear end side negative electrode terminal 12 may include a single torsion spring, or may include a plurality of torsion springs, or may include another spring that biases the rear end side battery by the biasing force in the front end side direction by contracting to the rear end side in accordance with the insertion of the rear end side battery from above. Yet alternatively, the rear end side negative electrode terminal 12 may include a spring material that allows the insertion of a battery only from the front end side, such as a coiled terminal spring, or may include another spring material having spring characteristics. Further, a description has been given using an example where the front end side negative electrode terminal 23 includes a coiled terminal spring. Alternatively, the front end side negative electrode terminal 23 may include a spring such as a torsion spring that biases the front end side battery by the biasing force in the front end side direction by contracting to the rear end side in accordance with the insertion of the front end side battery from above, or may include another spring material that allows the insertion of a battery only from the front end side, or may include another spring material having spring characteristics. Yet alternatively, the front end side positive electrode terminal and/or the rear end side positive electrode terminal may include a spring material having spring characteristics. The above present embodiment has been described using an example where two batteries (the front end side battery and the rear end side battery) are installed. Alternatively, three or more batteries may be able to be installed into the battery accommodation mechanism.

Another exemplary configuration of a battery accommodation structure according to the present invention accommodates a plurality of batteries. The battery accommodation structure includes an accommodation case (10) and a movable partition portion (20). The accommodation case accommodates a first battery and a second battery. The movable partition portion is provided in the accommodation case and partitions the accommodation case into a first accommodation space for accommodating the first battery and a second accommodation space for accommodating the second battery.

Based on the above, the partition portion for partitioning the first accommodation space and the second accommodation space is movable so that when the first battery is accommodated in the first accommodation space or when the second battery is accommodated in the second accommodation space, it is possible to move the partition portion to a position and in a direction that are suitable for accommodation. This makes it possible to make smaller an opening portion for accommodating batteries.

Further, the partition portion may move in the accommodation case to change sizes of the first accommodation space and the second accommodation space.

Based on the above, the movement of the partition portion in the accommodation case changes the sizes of the first accommodation space and the second accommodation space. Thus, when the first battery is accommodated in the first accommodation space or when the second battery is accommodated in the second accommodation space, it is possible to move the partition portion to a position suitable for accommodation and accommodate the batteries.

Further, the partition portion may be allowed to move in a first direction, in which the first accommodation space is enlarged while the second accommodation space is reduced; and in a second direction, in which the first accommodation space is reduced while the second accommodation space is enlarged.

Based on the above, it is possible to move the partition portion in a direction of enlarging the first accommodation space and in a direction of enlarging the second accommodation space. This facilitates the work of assembling the first battery in the first accommodation space, the work of detaching the first battery from the first accommodation space, the work of assembling the second battery in the second accommodation space, and the work of detaching the second battery from the second accommodation space.

Further, the accommodation case may have, in a part of an upper surface of the accommodation case, an opening portion for putting in and taking out the first battery and the second battery. If the partition portion has moved in the first direction, at least a part of the first accommodation space may be exposed to the opening portion, thereby enabling the first battery to be put into and taken out of the first accommodation space through the opening portion. If the partition portion has moved in the second direction, at least a part of the second accommodation space instead of the first accommodation space may be exposed to the opening portion, thereby enabling the second battery to be put into and taken out of the second accommodation space through the opening portion, and also making the first battery unable to be put into and taken out of the first accommodation space through the opening portion.

Based on the above, the partition portion moves in a direction in which the first accommodation space is enlarged, and the first battery is accommodated. Then, the partition portion moves in a direction in which the second accommodation space is enlarged, and the second battery is accommodated. This makes it possible to put in and take out the batteries through an opening portion of a minimum size.

Further, the partition portion may include a terminal portion configured to electrically connect a positive electrode of one of the first battery accommodated in the first accommodation space and the second battery accommodated in the second accommodation space, to a negative electrode of the other.

Based on the above, the partition portion can partition the first battery and the second battery that are accommodated, and can also connect the batteries together in series.

Further, the partition portion may be allowed to move in a sliding manner in the accommodation case.

Based on the above, it is possible to slide the partition portion to a position suitable for the work of accommodating a battery. This makes it possible to make smaller an opening portion for accommodating batteries.

Further, the accommodation case may be allowed to accommodate the first battery and the second battery by arranging the first battery and the second battery in a longitudinal direction of the batteries and electrically connecting an electrode of the first battery to an electrode of the second battery in series. The partition portion may be allowed to move in a sliding manner in the longitudinal direction of the batteries accommodated in the accommodation case.

Based on the above, it is possible to slide the partition portion to a position suitable for the work of accommodating a battery, in the longitudinal direction of the battery. This makes it possible to make smaller an opening portion for accommodating batteries.

Further, a first terminal spring (23) may be provided in the partition portion, the first terminal spring coming into contact with a negative electrode of one of the first battery and the second battery accommodated so as to be arranged in the longitudinal direction. A second terminal spring (12) may be provided in the accommodation case, the second terminal spring coming into contact with a negative electrode of the other of the first battery and the second battery accommodated so as to be arranged in the longitudinal direction. A biasing force of the second terminal spring acting on the first battery and the second battery accommodated in the accommodation case may be greater than a biasing force of the first terminal spring.

Based on the above, it is possible to stably accommodate a plurality of batteries.

Further, a first terminal spring may be provided in the partition portion, the first terminal spring being coiled and coming into contact with a negative electrode of one of the first battery and the second battery accommodated so as to be arranged in the longitudinal direction. A second terminal spring may be provided in the accommodation case, the second terminal spring including a torsion spring and coming into contact with a negative electrode of the other of the first battery and the second battery accommodated so as to be arranged in the longitudinal direction.

Based on the above, it is possible to insert and install the second battery into the second accommodation space such that its positive electrode side is inserted first, and also insert and install the second battery into the second accommodation space such that its negative electrode side is inserted first.

Further, a first abutment surface (22) may be formed in the partition portion on the second accommodation space side, the first abutment surface abutting a lower portion of an outer peripheral surface of the second battery. A second abutment portion (14) may be formed in an end portion of the accommodation case on the second accommodation space side, the second abutment portion abutting a lower portion of an outer peripheral surface of the second battery at the same height as the first abutment surface.

Based on the above, the second battery is accommodated such that the outer peripheral surface of the second battery on the positive electrode side abuts the first abutment surface, and the outer peripheral surface on the negative electrode side abuts the second abutment portion formed at the same height. This makes it possible to stably accommodate the second battery.

Another exemplary configuration of a battery accommodation method according to the present invention accommodates a plurality of batteries. The battery accommodation method includes a step of accommodating a first battery, a step of moving a partition portion, and a step of accommodating a second battery. The step of accommodating a first battery accommodates a first battery in an accommodation case having a space capable of accommodating the plurality of batteries. The step of moving a partition portion moves a movable partition portion provided in the accommodation case and configured to partition the accommodation case into a first accommodation space for accommodating the first battery and a second accommodation space for accommodating a second battery. The step of accommodating a second battery accommodates the second battery in the second accommodation space in the accommodation case.

Based on the above, it is possible to, after the first battery has been accommodated in the first accommodation space, move the partition portion to form the second accommodation space, and accommodate the second battery. This makes it possible to make smaller an opening portion for accommodating batteries.

While the present invention has been described in detail above, the above descriptions are merely illustrative in all respects, and do not limit the scope of the present invention. It is needless to say that the present invention can be improved and modified in various manners without departing the scope thereof. It is understood that the scope of the present invention should be interpreted only by the scope of the claims. Further, it is understood that the specific descriptions of the embodiments of the present invention enable a person skilled in the art to carry out an equivalent scope on the basis of the descriptions of the present invention and general technical knowledge. It should be understood that, when used in the specification, the components and the like described in the singular with the word "a" or "an" preceding them do not exclude the plurals of the components. Furthermore, it should be understood that, unless otherwise stated, the terms used in the specification are used in their common meanings in the field. Thus, unless otherwise defined, all the jargons and the technical terms used in the specification have the same meanings as those generally understood by a person skilled in the art in the field of the present invention. If there is a conflict, the specification (including definitions) takes precedence.

As described above, the present invention is useful as, for example, a battery accommodation structure, a battery accommodation method, and the like in order, for example, to accommodate a battery without supporting the battery using a cover to be attached after the accommodation of the battery, using a holding member or the like.

## Claims

1. A battery accommodation structure for accommodating a battery, the battery accommodation structure comprising, in an accommodation case (10) configured to accommodate the battery:
a positive electrode terminal (24) connected to a positive electrode of the battery;
a negative electrode terminal (12) connected to a negative electrode of the battery; and
a clamping spring (22) provided between the positive electrode terminal and the negative electrode terminal and configured to clamp a part of an outer peripheral surface of the battery,
**characterized in that**
the clamping spring includes a supporting spring (29) configured to, in an inner surface of the clamping spring clamping the battery by abutting an outer peripheral surface of the battery on both sides, protrude further inward than the inner surface from a lower portion of the inner surface to support the outer peripheral surface of the battery in an upward direction from the lower portion.

2. The battery accommodation structure according to claim 1, wherein
the negative electrode terminal includes a terminal spring, and
the clamping spring is provided in an accommodation space in the accommodation case on the positive electrode terminal side, the accommodation space formed between the positive electrode terminal and the negative electrode terminal.

3. The battery accommodation structure according to claim 2, wherein
the clamping spring is provided at a position where the clamping spring clamps an outer peripheral surface of a part closest to the positive electrode among parts obtained by dividing the battery accommodated in the accommodation case into quarters in a longitudinal direction.

4. The battery accommodation structure according to any one of claims 1 to 3, wherein
the negative electrode terminal includes a torsion spring.

5. The battery accommodation structure according to any one of claims 1 to 4, further comprising
a cover (3) configured to detachably cover the accommodated battery, wherein
if the cover has been attached, an inner surface of the cover abuts at least a part of an outer surface of the clamping spring.

6. A battery accommodation method for accommodating a battery, the battery accommodation method comprising
electrically connecting electrodes of a battery to be accommodated to a positive electrode terminal and a negative electrode terminal by fitting the electrodes between the positive electrode terminal and the negative electrode terminal, and accommodating the battery in the accommodation case by clamping a part of the outer peripheral surface of the battery with a clamping spring,
the method further being **characterized in** comprising
by a supporting spring (29), included in the clamping spring in an inner surface of the clamping spring clamping the battery by abutting an outer peripheral surface of the battery on both sides, protruding further inward than the inner surface from a lower portion of the inner surface, supporting the outer peripheral surface of the battery in an upward direction from the lower portion.

## Patentansprüche

1. Batterieaufnahmestruktur zum Aufnehmen einer Batterie, wobei die Batterieaufnahmestruktur umfasst, in einem Aufnahmegehäuse (10), das zum Aufnehmen der Batterie konfiguriert ist:
einen positiven Elektrodenanschluss (24), der mit einer positiven Elektrode der Batterie verbunden ist;
einen negativen Elektrodenanschluss (12), der mit einer negativen Elektrode der Batterie verbunden ist; und
eine Klemmfeder (22), die zwischen dem positiven Elektrodenanschluss und dem negativen Elektrodenanschluss bereitgestellt ist und die konfiguriert ist, einen Teil einer äußeren peripheren Oberfläche der Batterie festzuklemmen,
**dadurch gekennzeichnet, dass**
die Klemmfeder eine Stützfeder (29) beinhaltet, die konfiguriert ist, in eine innere Oberfläche der Klemmfeder, die die Batterie festklemmt durch Anstoßen einer äußeren peripheren Oberfläche der Batterie auf beiden Seiten, weiter hineinzuragen als die innere Oberfläche von einem unteren Teil der inneren Oberfläche, um die äußere periphere Oberfläche der Batterie in einer Aufwärtsrichtung ausgehend von dem unteren Teil zu stützen.

2. Batterieaufnahmestruktur nach Anspruch 1, wobei der negative Elektrodenanschluss eine Anschlussfeder beinhaltet, und wobei die Klemmfeder in einem Aufnahmeraum in dem Aufnahmegehäuse auf der Seite des positiven Elektrodenanschlusses bereitgestellt wird, wobei der Aufnahmeraum zwischen dem positiven Elektrodenanschluss und dem negativen Elektrodenanschluss ausgebildet ist.

3. Batterieaufnahmestruktur nach Anspruch 2, wobei die Klemmfeder an einer Position bereitgestellt wird, an der die Klemmfeder eine äußere periphere Oberfläche eines Teils festklemmt, der dem positiven Elektrodenanschluss am nächsten ist, mit dem Teil als einem unter Teilen, die dadurch erhalten werden, dass die Batterie, die in dem Aufnahmegehäuse aufgenommen wird, in Längsrichtung in Viertel aufgeteilt wird.

4. Batterieaufnahmestruktur nach einem der Ansprüche 1 bis 3, wobei der negative Elektrodenanschluss eine Torsionsfeder beinhaltet.

5. Batterieaufnahmestruktur nach einem der Ansprüche 1 bis 4, ferner umfassend eine Abdeckung (3), die konfiguriert ist zum abnehmbaren Verdecken der aufgenommenen Batterie, wobei, falls die Abdeckung angebracht wurde, eine innere Oberfläche der Abdeckung an zumindest einen Teil einer äußeren Oberfläche der Klemmfeder angrenzt.

6. Batterieaufnahmestruktur-Verfahren zum Aufnehmen einer Batterie, wobei das Batterieaufnahmestruktur-Verfahren umfasst
elektrisches Verbinden von Elektroden einer Batterie, die aufgenommen werden soll, mit einem positiven Elektrodenanschluss und einem negativen Elektrodenanschluss durch Einbauen der Elektroden zwischen dem positiven Elektrodenanschluss und dem negativen Elektrodenanschluss, und
Aufnehmen der Batterie in dem Aufnahmegehäuse durch Festklemmen eines Teils der äußeren peripheren Oberfläche der Batterie mit einer Klemmfeder,
wobei das Verfahren ferner **gekennzeichnet ist durch**
mittels einer Stützfeder (29), die in der Klemmfeder enthalten ist in einer inneren Oberfläche der Klemmfeder, die die Batterie festklemmt durch Anstoßen einer äußeren peripheren Oberfläche der Batterie auf beiden Seiten, und die weiter hineinragt als die innere Oberfläche von einem unteren Teil der inneren Oberfläche, Stützen der äußeren peripheren Oberfläche der Batterie in einer Aufwärtsrichtung ausgehend von dem unteren Teil.

## Revendications

1. Une structure de logement d'une batterie pour loger une batterie, la structure de logement d'une batterie comprenant, dans un boitier de logement (10) configuré pour loger la batterie :
une borne d'électrode positive (24) connectée à une électrode positive de la batterie ;
une borne d'électrode négative (12) connectée à une électrode négative de la batterie ; et
un ressort de serrage (22) disposé entre la borne d'électrode positive et la borne d'électrode négative et configuré pour serrer une partie de la surface périphérique extérieure de la batterie,
**caractérisée en ce que**
le ressort de serrage comprend un ressort de support (29) configuré pour, dans une surface intérieure du ressort de serrage qui serre la batterie par venue en appui d'une surface périphérique extérieure de la batterie des deux côtés, faire saillie plus vers l'intérieur que la surface intérieure depuis une partie inférieure de la surface intérieure pour supporter la surface périphérique extérieure de la batterie dans une direction tournée vers le haut par rapport à la partie inférieure.

2. La structure de logement de batterie de la revendication 1, dans laquelle
la borne d'électrode négative inclut un ressort de borne, et
le ressort de serrage est disposé dans un espace de logement dans le boitier de logement sur le côté de la borne d'électrode positive, l'espace de logement étant formé entre la borne d'électrode positive et la borne d'électrode négative.

3. La structure de logement de batterie de la revendication 2, dans laquelle
le ressort de serrage est disposé en une position où le ressort de serrage serre une surface périphérique extérieure d'une partie la plus proche de l'électrode positive parmi les parties obtenues en divisant la batterie logée dans le boitier de logement en quarts dans une direction longitudinale.

4. La structure de logement de batterie de l'une des revendications 1 à 3, dans laquelle la borne d'électrode négative comprend un ressort de torsion.

5. La structure de logement de batterie de l'une des revendications 1 à 4, comprenant en outre
un couvercle (3) configuré pour recouvrir de manière démontable la batterie logée, où, si le couvercle a été monté, une surface intérieure du couvercle vient en appui contre au moins une partie d'une surface extérieure du ressort de serrage.

6. Un procédé de logement de batterie pour loger une batterie, le procédé de logement de batterie comprenant :
la connexion électrique d'électrodes d'une batterie à loger à une borne d'électrode positive et à une borne d'électrode négative par ajustement des électrodes entre la borne d'électrode positive et la borne d'électrode négative, et
le logement de la batterie dans le boitier de logement par serrage d'une partie de la surface périphérique externe de la batterie avec un ressort de serrage,
le procédé étant en outre **caractérisé en ce qu'**il comprend
par un ressort de support (29), inclus dans le ressort de serrage dans une surface intérieure du ressort de serrage serrant la batterie par venue en appui d'une surface périphérique extérieure de la batterie des deux côtés, la venue en saillie plus vers l'intérieur que la surface intérieure par rapport à une partie inférieure de la surface intérieure, en supportant la surface périphérique extérieure de la batterie dans une direction tournée vers le haut par rapport à la partie inférieure.
